# EUROPÄISCHE PATENTSCHRIFT

(11) **EP 1 149 306 B1**
(45) Veröffentlichungstag und Bekanntmachung des Hinweises auf die Patenterteilung: **02.04.2003**
(21) Anmeldenummer: 00904810.9
(22) Anmeldetag: 03.01.2000
(51) Int. Cl.: G01S 13/87, G01S 13/93, G01S 13/44, G01S 13/48

(54) **VERFAHREN ZUR ERFASSUNG VON ZIELOBJEKTEN UND ZUR BESTIMMUNG DEREN RICHTUNG FÜR EIN RADARGERÄT IN EINEM KRAFTFAHRZEUG**
METHOD FOR DETECTING TARGETS AND FOR DETERMINING THEIR DIRECTION FOR A RADAR DEVICE IN A MOTOR VEHICLE
PROCEDE POUR DETECTER DES CIBLES ET POUR DETERMINER LEUR DIRECTION POUR UN RADAR DANS UN VEHICULE AUTOMOBILE

(30) Priorität: 07.01.1999 DE 19900328
(43) Veröffentlichungstag der Anmeldung: 31.10.2001
(73) Patentinhaber: SIEMENS AKTIENGESELLSCHAFT, 80333 München (DE)
(72) Erfinder: DÖRFLER, Reiner, D-90562 Heroldsberg (DE)
(86) Internationale Anmeldenummer: DE0000011
(87) Internationale Veröffentlichungsnummer: WO00040999

(56) Entgegenhaltungen:
- EP-A- 0 172 094
- EP-A- 0 805 360
- WO-A-95/12824
- US-A- 4 947 176
- US-A- 5 598 163
- US-A- 5 815 112
- PATENT ABSTRACTS OF JAPAN vol. 012, no. 463 (P-796), 6. Dezember 1988 (1988-12-06) & JP 63 186176 A (MITSUBISHI ELECTRIC CORP), 1. August 1988 (1988-08-01)

## Beschreibung

Die Erfindung betrifft ein Verfahren zur Erfassung von Zielobjekten und zur Bestimmung deren Richtung, Entfernung, Geschwindigkeit und dergleichen für ein Radargerät.

Wie beispielsweise durch die EP 0 727 051 B1 belegt wird, ist die Radartechnik auch für die Anwendung in der Automobil-Industrie insofern wichtig geworden, als Sicherheitsstandards eines Kraftfahrzeuges im Zuge der immer größer werdenden Verkehrsdichte ständig angepaßt werden müssen. Hierfür wurden Radargeräte konzipiert, die stehende sowie auch relativ zu einem KFZ sich bewegende Zielobjekte berührungslos erfassen sollen, um deren Entfernung, Geschwindigkeit, Beschaffenheit, Anwesenheit, Richtung, etc. zu bestimmen. Die hierfür verwendeten Radargeräte basieren im wesentlichen auf zwei Haupt-Verfahrenstechniken der Radartechnik, die unter den Namen "Simultaneous Lobing" und "Sequential Lobing" bekannt sind.

Unter "Simultaneous Lobing" versteht man eine Monopulsradar-Technik. Die zur Realisierung dieser Technik herangezogenen Radargeräte, die diese Technik benutzen, enthalten eine Sende- und Empfangseinrichtung mit typisch 2 (eindimensional) oder 4 (zweidimensional) Erfassungsbereichen, die sich teilweise überlappen und die gleichzeitig ausgewertet werden. Auf diese Weise soll durch Intensitätsvergleich eine genaue Messung des Positionswinkels des Zielobjektes bezüglich der Radargeräteachse ermöglicht werden. Eine Winkelauflösung ist nicht realisierbar, d. h., zwei oder mehrere Objekte in gleichem Abstand können als solche nicht getrennt voneinander aufgelöst werden, da statt der mindestens zwei Objekte nur ein einziges erfaßt wird und ferner diesem ein falscher Positionswinkel zugeordnet wird.

Unter der Radartechnik "Sequential Lobing" versteht man das Erzeugen mehrerer Strahlen mit unterschiedlichen Strahlfeldern und deren zeitversetzte Aktivierung und Auswertung. Die damit erreichte Winkelgenauigkeit genügt erhöhten Ansprüchen der Automobilanwendung an die genaue Messung des Positionswinkels des Zielobjektes nicht. Dies liegt vor allem daran, daß bei diesem Verfahren in erheblichem Umfang auftretende Fluktuationsfehler die Messung des Positionswinkels sehr stark beeinflussen, so daß die Messungen erheblichen Intensitätsschwankungen unterliegen. Dies kann unter anderem zu Fehlinterpretationen bei der Auswertung der Signale hinsichtlich der Positionswinkeländerung führen.

Aus der Druckschrift US 5 598 163 ist ein mehrstrahliges Radarsystem bekannt, das mehrere Sende- und Empfangseinrichtungen aufweist. Der Detektionsbereich des Radarsystems setzt sich dabei aus den Strahlfeldern der Empfangseinrichtungen zusammen. Die Echosignale werden dabei nach dem Monopulsverfahren ausgewertet.

Ein bekanntes mehrstrahliges Radarsystem für Kraftfahrzeuge weist wenigstens drei Sende- und Empfangseinrichtungen auf (EP 0 805 360 A2). Durch eine Kanalsteuerung können die Sende- und Empfangseinrichtungen derart gesteuert werden, daß mehrere benachbarte Sende- und Empfangseinrichtungen simultan betrieben werden, was zu einer hohen Winkelauflösung führt.

Aufgabe der Erfindung ist es, ein Verfahren der genannten Art zu schaffen, das eine besonders hohe Genauigkeit der Positionswinkelmessung durch die Vermeidung von Fluktuationsfehlern beim Meßvorgang erreicht und trozdem eine Auflösung mehrerer Objekte in gleichem Abstand bietet.

Diese Aufgabe wird dadurch gelöst, daß in einem Radargerät mindestens drei Sende- und Empfangseinrichtungen für Radar-- strahlen derart angeordnet werden, daß ihre Strahlfelder den Detektionsbereich des Radargerätes bilden, und die mindestens drei Sende- und Empfangseinrichtungen derart sukzessive aktiviert und deaktiviert werden, daß mindestens zwei benachbarte Sende- und Empfangseinrichtungen simultan betrieben werden. Insofern wird der gesamte Detektionsbereich des Radargerätes in dem erfindungsgemäßen Verfahren in mehrere Teilbereiche, hier Strahlfelder genannt, unterteilt, die paarweise oder auch zu mehreren einen Detektionsteilbereich bilden, der sukzessive den gesamten Detektionsbereich abtastet. Unter sukzessiver Aktivierung und Deaktivierung ist dabei zu verstehen, daß nicht alle Strahlfelder gleichzeitig aktiv sind. Die Anzahl der zu aktivierenden Sende- und Empfangseinrichtungen für einen Detektionsteilbereich kann sich auch während eines Scan-Vorganges ändern. Mit einem derartigen Verfahren werden im Grundsatz die Vorteile der beiden bekannten Verfahren "Simultaneous Lobing" und "Sequential Lobing" derart in einem Verfahren oder in einer Gerätebauform vereint, daß sogar die spezifischen Nachteile der jeweiligen bekannten Verfahren kompensiert werden.

Eine Präzisierung des erfindungsgemäßen Verfahrens wird im Anspruch 2 vorgenommen. Hierbei soll ein kleiner, lediglich zwei Sende- und Empfangseinrichtungen umfassender Detektionsteilbereich geschaffen werden, der eine genaue und schrittweise Abtastung des gesamten Detektionsbereiches des Radargerätes effektiv gewährleistet.

Die Weiterbildung nach Anspruch 3 sieht eine genaue Abfolge eines den gesamten Detektionsbereich umfassenden Radar-Scans vor. Diese Abfolge besteht im wesentlichen aus einer Überlappung von nacheinander aktivierten Detektionsteilbereichen um mindestens ein Strahlfeld einer Sende- und Empfangseinrichtung. Dies bedeutet, daß beispielsweise nach der Deaktivierung eines Paares von Sende- und Empfangseinrichtungen ein neues Paar zur Aktivierung derart bestimmt wird, daß einerseits die zum gerade deaktivierten Paar benachbarte Sende- und Empfangseinrichtung aktiviert und andererseits die zur letzteren benachbarte, gerade deaktivierte Sende- und Empfangseinrichtung reaktiviert werden.

Die Ansprüche 4 und 5 geben an, wie und nach welchen Verfahren die durch das erfindungsgemäße Verfahren erzeugten Echo-Signale bevorzugterweise ausgewertet werden.

Weitere Vorteile, Einzelheiten und Merkmale der Erfindung sind der nachfolgenden Beschreibung entnehmbar, in der ein Ausführungsbeispiel des erfindungsgemäßen Verfahrens anhand der beigefügten Zeichnungen näher erläutert wird. Es zeigen:
- Fig. 1: eine perspektivische Ansicht eines PKW, der ein erfindungsgemäßes Radargerät aufweist;
- Fig. 2: eine schematisierte Darstellung des Radargerätes mit seinen einzelnen Strahlfeldern; und

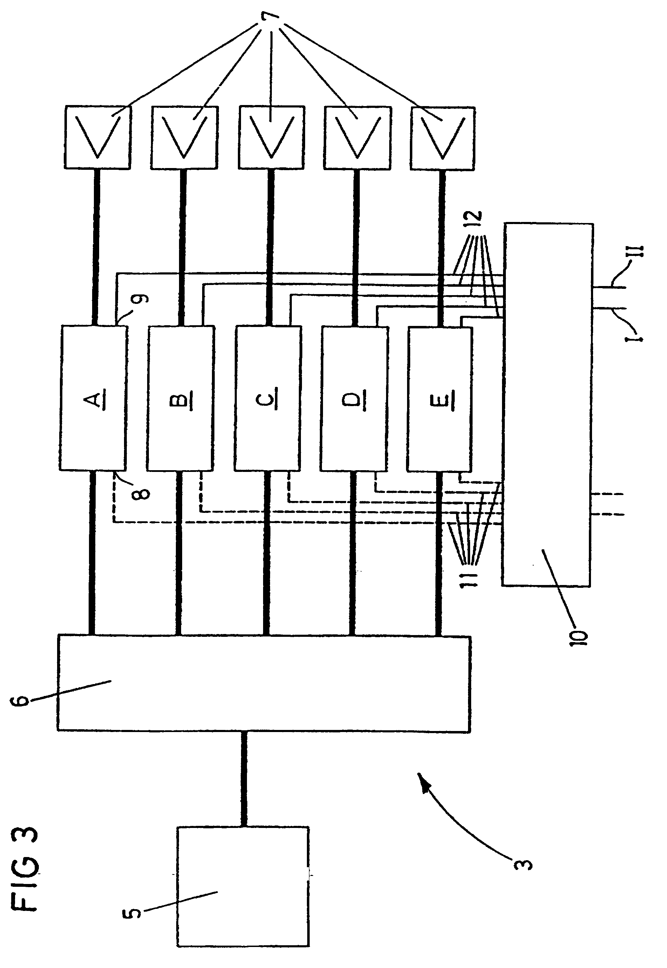

- Fig. 3: ein Blockschaltbild eines Radargerätes.

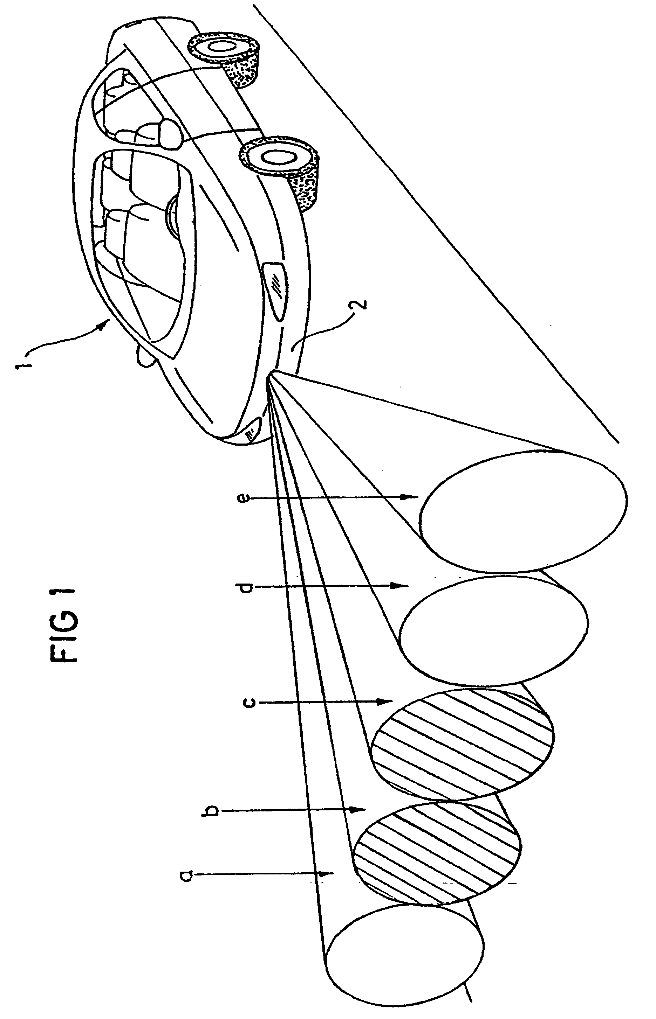

Radargeräte, die nach dem erfindungsgemäßen Verfahren funktionieren, werden insbesondere in Kraftfahrzeugen eingesetzt, um beispielsweise die Entfernung zu anderen Kraftfahrzeugen ständig zu ermitteln. In Fig. 1 ist ein PKW 1 gezeigt, der in seinem vorderen Bereich 2 mittig ein in der Karosserie untergebrachtes, in Fig. 1 nicht dargestelltes Radargerät aufweist. Dieses Radargerät umfaßt fünf Sende- und Empfangseinrichtungen, die jeweils auf bekannte Weise Radarstrahlen aussenden. Jedem dieser Strahlen der Sende- und Empfangseinrichtung ist ein bestimmter Scanbereich zugeordnet, der in Fig. 1 als ein Strahlfeld a, b, c, d oder e erkennbar ist. Jedes dieser Strahlfelder a, b, c, d, e weist eine sich kegelförmig von dem Radargerät ausdehnende Form auf und überlappt das jeweilige benachbarte Strahlfeld. Insoweit ist die Darstellung in Fig. 1 mit sich berührenden Strahlfeldern lediglich modellhaft zu verstehen.

Das Radargerät verfährt erfindungsgemäß so, daß sukzessive ein Paar von Sende- und Empfangseinrichtungen simultan aktiviert wird, währenddessen die restlichen drei Sende- und Empfangseinrichtungen deaktiviert sind. In dem in Fig. 1 gezeigten Augenblick des Scan-Vorganges sind diejenigen Sende- und Empfangseinrichtungen mit den Strahlfeldern b und c aktiviert und diejenigen Sende- und Empfangseinrichtungen mit den Strahlfeldern a, d und e deaktiviert.

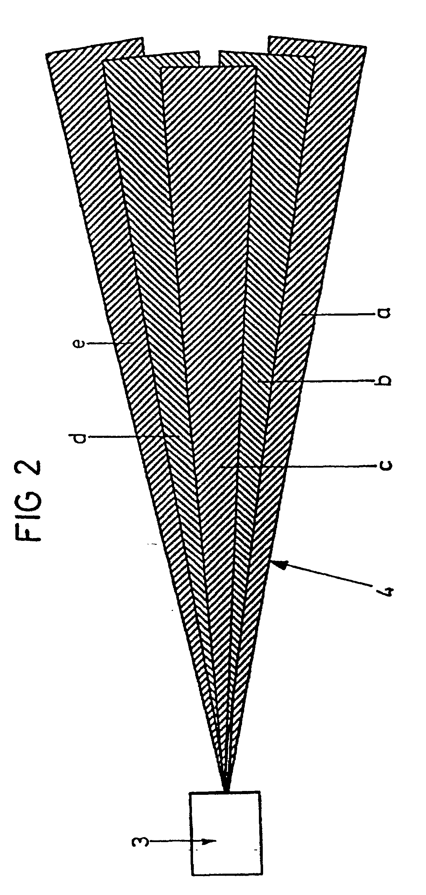

In Fig. 2 ist die Strahlfeldanordnung des Radargerätes 3 explizit dargestellt. Die gleichgroß dimensionierten Strahlfelder a, b, c, d, e sind derart angeordnet, daß sie ihr jeweilig benachbartes Strahlfeld überlappen. Der Überlappungsgrad der Strahlfelder a, b, c, d, e liegt bei annähernd der Hälfte der Breite eines Strahlfeldes. Der Detektionsbereich 4 wird durch die beiden äußeren Strahlfelder a und e begrenzt und weist eine sich von dem Radargerät 3 in der Detektionsebene divergent ausdehnende Form auf.

Um eine besonders zuverlässige Erfassung des Detektionsbereiches 4 zu erreichen, funktioniert das Radargerät 3 erfindungsgemäß vorzugsweise entsprechend der Ablauffolge nach der folgenden Tabelle 1.

**Tabelle 1**

| | Strahlpaar a/b | Strahlpaar b/c | Strahlpaar c/d | Strahlpaar d/e |
|---|---|---|---|---|
| Sender + Empfänger A | ein | aus | aus | aus |
| Sender + Empfänger B | ein | ein | aus | aus |
| Sender + Empfänger C | aus | ein | ein | aus |
| Sender + Empfänger D | aus | aus | ein | ein |
| Sender + Empfänger E | aus | aus | aus | ein |
| ZF-Ausgang I | Strahl a | Strahl b | Strahl c | Strahl d |
| ZF-Ausgang II | Strahl b | Strahl c | Strahl d | Strahl e |

Hieraus ist ersichtlich, daß die Sende- und Empfangseinrichtungen A, B, C, D und E jeweils paarweise aktiviert werden, und somit vier unterschiedliche Strahlfeldpaare a/b, b/c, c/d, d/e erzeugt werden. Es handelt sich also um ein ständiges Ein- und Ausschalten von Sende- und Empfangseinrichtungspaaren. Auf diese Weise ist eine besonders hohe Genauigkeit des Positionswinkels eines Zielobjektes erreichbar, da einerseits mehrere, hier fünf, Strahlfelder verwendet werden und andererseits durch das Aktivieren von Strahlpaaren die Winkelmeßfehler durch Signalfluktuation vermieden werden.

Ein Scanvorgang des Detektionsbereiches 4 besteht darin, Sende- und Empfangseinrichtungspaare sukzessive von links nach rechts oder von rechts nach links (vgl. Fig. 1) zu aktivieren. Bei diesem Ablauf wird nach der Deaktivierung beispielsweise eines Strahlpaares b/c das neue Sende- und Empfangseinrichtungspaar c/d und danach das Sende- und Empfangseinrichtungspaar d/e usw. aktiviert. Auf diese Weise wird ein Scan-Vorgang realisiert, der durch das erneute Aktivieren einer deaktivierten Sende- und Empfangseinrichtung eine weitere überlappende Detektionseigenschaft aufweist.

Das Radargerät 3, das nach dem erfindungsgemäßen Verfahren funktioniert, wird in Fig. 4 dargestellt. Es umfaßt einen spannungsgesteuerten Oszillator 5, der eine Arbeitsfrequenz in einem für PKW-Anwendungen üblichen Band in einem Bereich von 76 bis 77 GHz erzeugt. Hierfür sind insbesondere Gunndioden oder HEMT geeignet. Die Arbeitsfrequenz wird einem Verteiler 6 zugeleitet, der die jeweiligen Sende- und Empfangseinrichtungen A, B, C, D und E mit den Radarsignalen versorgt. Die Verteilung kann z. B. durch passive Teiler oder entsprechende HF-Schalter realisiert werden. Die Sende- und Empfangseinrichtungen A bis E sind jeweils mit einer Antenne 7 für die Strahlfelder a bis e verbunden. Die Sende- und Empfangseinrichtungen A bis E umfassen jeweils einen Steuerleitungseingang 8 und einen ZF-Signalausgang 9. Die Steuerleitungseingänge 8 sind mit einer Schalteinrichtung 10 verbunden, der von einer nicht dargestellten Steuereinheit geregelt wird. Die vorstehenden Komponenten können beispielsweise mit Hilfe eines Mikroprozessors realisiert werden. Soll nun beispielsweise während eines Scanvorganges die Sende- und Empfangseinrichtungen B und C aktiviert werden, wird der Schalter 10 so geschaltet, daß ein Signal über die entsprechenden Steuerleitungen 11 den Steuerleitungseingängen 8 der Sende- und Empfangseinrichtungen B und C zugeführt wird. Dieses Signal aktiviert die beiden ausgewählten Sende- und Empfangseinrichtungen B und C. Empfangene Echosignale werden über die ZF-Signalausgänge 9 der Sende- und Empfangseinrichtungen B und C dem Schalter 10 als Zwischenfrequenzsignal (ZF-Signal) via ZF-Signalleitungen 12 zugeführt. Diese Signale werden über ZF-Ausgänge I, II der Steuereinheit zu deren Auswertung weitergeleitet. Welches Echosignal während des Ablaufes des Verfahrens vom Schalter 10 der Steuereinrichtung über die ZF-Ausgänge I, II zugeführt wird, kann aus den beiden letzten Zeilen der Tabelle 1 entnommen werden.

## Patentansprüche

1. Verfahren zur Erfassung von Zielobjekten und zur Bestimmung deren Richtung, Entfernung, Geschwindigkeit u. dgl. für ein Radargerät (3) insbesondere zur Anwendung in Kraftfahrzeugen mit folgenden Verfahrensschritten:
- Anordnen von mindestens drei Sende- und Empfangseinrichtungen (A, B, C, D, E) für Radarstrahlen derart, daß ihre Strahlfelder (a, b, c, d, e) den Detektionsbereich (4) des Radargerätes (3) bilden,
- sukzessives Aktivieren und Deaktivieren der mindestens drei Sende- und Empfangseinrichtungen (A, B, C, D, E) derart, daß mindestens zwei benachbarte Sende- und Empfangseinrichtungen simultan betrieben werden, und
- Auswerten der Echosignale der Sende- und Empfangseinrichtungen (A, B, C, D, E) nach dem Monopulsverfahren.

2. Verfahren nach Anspruch 1, **dadurch gekennzeichnet, daß** genau ein Paar benachbarter Sende- und Empfangseinrichtungen (A, B, C, D, E) simultan aktiviert wird.

3. Verfahren nach einem der Ansprüche 1 oder 2, **dadurch gekennzeichnet, daß** für das Aktivieren der mindestens zwei Sende- und Empfangseinrichtungen (A, B, C, D, E) mindestens eine der gerade desaktivierten Sende- und Empfangseinrichtungen (A, B, C, D, E) wieder aktiviert wird.

4. Verfahren nach einem der Ansprüche 1 bis 3, **dadurch gekennzeichnet, daß** die Echosignale der Sende- und Empfangseinrichtungen (A, B, C, D, E) individuell nach Entfernung, Geschwindigkeit und Intensität ausgewertet werden.

5. Verfahren nach einem der Ansprüche 1 bis 4, **dadurch gekennzeichnet , daß** durch einen Vergleich der Intensitäten der mindestens zwei Sende- und Empfangseinrichtungen (A, B, C, D, E) der Positionswinkel des Zielobjektes relativ zum Radargerät (3) bestimmt wird.

## Claims

1. Method for detecting target objects and for determining their direction, range, speed and the like for a radar device (3) in particular for use in motor vehicles, comprising, the following method steps:
- arrangement of at least three transmitting and receiving devices (A, B, C, D, :E) for radar beams in such a manner that their beam fields (a, b, c, d, e) form the detection area (4) of the radar device (3),
- successive activation and deactivation of the at least three transmitting and receiving devices (A, B, C, D, E) in such a manner that at least two adjacent transmitting and receiving devices are operated simultaneously, and
- evaluation of the echo signals from the transmitting and receiving devices (A, B, C, D, E) using the monopulse method.

2. Method according to Claim 1, **characterized in that** one, and only one, pair of adjacent transmitting and receiving devices (A, B, C, D, E) are activated simultaneously.

3. Method according to one of Claims 1 or 2, **characterized in that** at least one of the currently deactivated transmitting and receiving devices (A, B, C, D, E) is reactivated for activation of the at least two transmitting and receiving devices (A, B, C, D, E).

4. Method according to one of Claims 1 to 3, **characterized in that** the echo signals from the transmitting and receiving devices (A, B, C, D, E) are evaluated individually on the basis of range, speed and intensity.

5. Method according to one of Claims 1 to 4, **characterized in that** the position angle of the target object relative to the radar device (3) is determined by comparison of the intensities of the at least two transmitting and receiving devices (A, B, C, D, E).

## Revendications

1. Procédé pour détecter des cibles et pour déterminer leur direction, distance, vitesse, etc. pour un radar (3), en particulier pour l'application dans des véhicules automobiles, comprenant les étapes suivantes :
- mise en place d'au moins trois dispositifs d'émission-réception (A, B, C, D, E) de faisceaux radar de manière à ce que leurs champs de rayonnement (a, b, c, d, e) forment la zone de détection (4) du radar (3),
- activation et désactivation successives desdits au moins trois dispositifs d'émission-réception (A, B, C, D, E) de manière à faire fonctionner simultanément au moins deux dispositifs d'émission-réception voisins, et
- évaluation des signaux d'écho des dispositifs d'émission-réception (A, B, C, D, E) selon la technique monopulse.

2. Procédé selon la revendication 1, **caractérisé en ce que** précisément une paire de dispositifs d'émission-réception (A, B, C, D, E) voisins est activée simultanément.

3. Procédé selon l'une des revendications 1 et 2, **caractérisé en ce que** pour activer lesdits au moins deux dispositifs d'émission-réception (A, B, C, D, E) au moins un des dispositifs d'émission-réception (A, B, C, D, E) venant d'être désactivés est réactivé.

4. Procédé selon l'une des revendications 1 à 3, **caractérisé en ce que** les signaux d'écho des dispositifs d'émission-réception (A, B, C, D, E) sont évalués individuellement selon la distance, la vitesse et l'intensité.

5. Procédé selon l'une des revendications 1 à 4, **caractérisé en ce que** l'angle de position de la cible par rapport au radar (3) est déterminé par une comparaison des intensités desdits au moins deux dispositifs d'émission-réception (A, B, C, D, E).
